# EUROPÄISCHE PATENTSCHRIFT

(11) **EP 0 771 257 B1**
(45) Veröffentlichungstag und Bekanntmachung des Hinweises auf die Patenterteilung: **12.08.1998**
(21) Anmeldenummer: 96914830.3
(22) Anmeldetag: 23.05.1996
(51) Int. Cl.: B26D 1/00

(54) **ROTIEREND ANTREIBBARES SCHNEIDWERKZEUG**
ROTARY CUTTING TOOL
OUTIL DE COUPE ENTRAINE EN ROTATION

(30) Priorität: 30.05.1995 CH 1582/95
(43) Veröffentlichungstag der Anmeldung: 07.05.1997
(73) Patentinhaber: GRAPHA-HOLDING AG, 6052 Hergiswil (CH)
(72) Erfinder: Langenegger, Daniel, 4802 Strengelbach (CH); Schönenberger, Jörg, 70567 Stuttgart (DE)
(86) Internationale Anmeldenummer: CH9600200
(87) Internationale Veröffentlichungsnummer: WO9638271

(56) Entgegenhaltungen:
- DE-A- 3 413 615
- DE-A- 3 536 989
- DE-A- 3 719 721
- US-A- 5 165 319

## Beschreibung

Die Erfindung betrifft ein rotierend antreibbares Schneidwerkzeug gemäss Oberbegriff des Patentanspruches 1.

Ein solches Schneidwerkzeug vermittelt die DE - B - 37 19 721, bei dem der Messerträger an der von der Schneidebene abgewendeten Rückseite durch eine schräg nach aussen abfallende Ringfläche ausgebildet ist, an welcher die Schneidmesser in Führungsnuten hinsichtlich der Schneidebene verschieb- und feststellbar angeordnet sind, wobei das Feststellen der Schneidmesser durch Schrauben erfolgt, die einen Schlitz des Messerschaftes durchsetzen und mit dem Kopf an letzterem anliegen. Die Schneidkraft wird zum Teil von den Schrauben als Biege- und Scherkräfte aufgenommen und der Schaft des Schneidmessers ist durch den Schlitz erheblich geschwächt -eine an sich unzulängliche Bauweise.

Aufgabe der vorliegenden Erfindung ist es, ein Schneidwerkzeug der eingangs genannten Art zu schaffen, bei dem die erwähnten Nachteile behoben sind, die Führungsnuten geschont werden und das einen schnelleren Messerwechsel gestattet.

Erfindungsgemäss wird diese Aufgabe nach den kennzeichnenden Merkmalen des Patentanspruches 1 gelöst.
Der Einspannquerschnitt des Schaftes bleibt unverändert konstant.

Anschliessend wird die Erfindung unter Bezugnahme auf die Zeichnung, auf die bezüglich aller in der Beschreibung nicht näher erwähnten Einzelheiten ausdrücklich verwiesen wird, anhand eines Ausführungsbeispiels erläutert. In der Zeichnung zeigen:
- Fig. 1: eine stirnseitige Ansicht eines Schneidwerkzeuges und
- Fig. 2: einen Querschnitt des Schneidwerkzeuges nach der Linie II - II in Fig. 1.

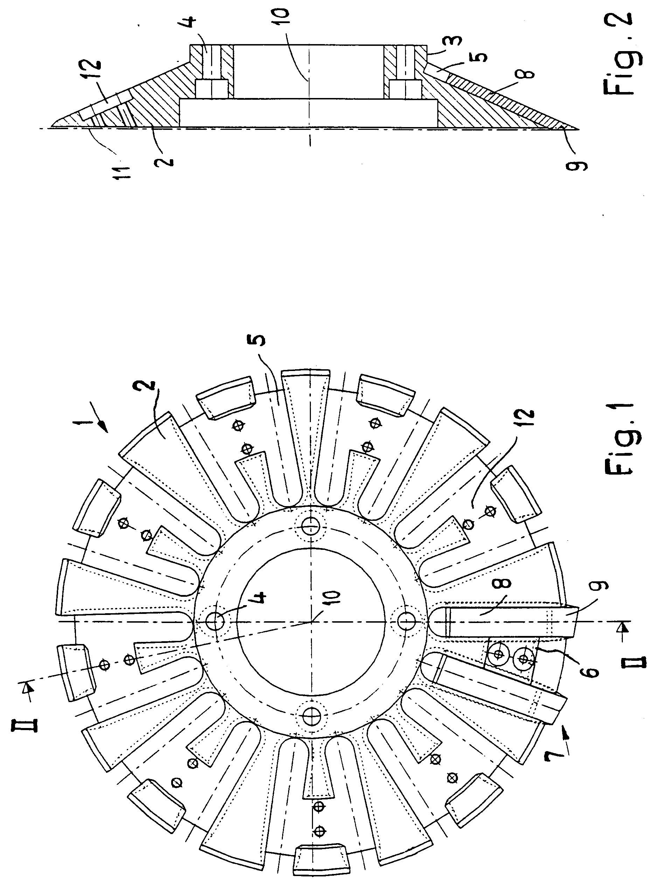

In den Fig. 1 und 2 ist ein rotierend antreibbares Schneidwerkzeug 1 zum Beschneiden von ein- oder mehrblättrigen Druckprodukten oder Materialbahnen dargestellt, das aus einem kreisförmigen Messerträger 2 besteht, dessen Nabe 3 an einer Antriebswelle eines Getriebes (nicht ersichtlich) lösbar befestigt werden kann. Diesbezüglich sind dafür Schraubendurch gangslöcher 4 vorgesehen. Von der Nabe 3 erstreckt sich in radialer Richtung an den Umfang des Messerträgers 2 eine kegelige Oberfläche, an welcher auf den Umfang verteilt radial verlaufende, vor der Nabe 3 endende Führungsnuten 5 vorgesehen sind.
Jeweils ein Paar der Führungsnuten 5 bildet mit einer dazwischen liegenden Klemmplatte 6 eine Aufspannanordnung für die in den Führungsnuten 5 verschiebbaren Schneidmesser 7, die an ihrem Schaft 8 festklemmt werden.
Der Schaft 8 der Schneidmesser 7 besitzt einen trapezförmigen Querschnitt, sodass er in die schwalbenschwanzförmige Führungsnut 5 längsverschiebbar passt.
Die Schneidmesserenden 9 überstehen den Umfang des Messerträgers 2 und bilden eine zur Rotationsachse 10 des Schneidwerkzeuges 1 senkrecht verlaufende Schneidebene 11, die vor der Stirnseite des Messerträgers 2 liegt.
Die Klemmplatte 6 ist aufgrund der hier in einem spitzen Winkel angeordneten Führungsnuten 5 oder Schneidmesser 7 mit gleichem Winkel trapezförmig ausgebildet und durch eine Befestigungsvorrichtung mit dem Messerträger 2 durch zwei Schrauben verbunden. Die sich zur Rotationsachse 10 hin verjüngende Klemmplatte 6 liegt mit den schrägen Trapezflächen an den ihr zugewendeten geneigten Komplementärflächen der Schäfte 8 zweier Schneidmesser 7 an und presst diese bei festgezogenen Schrauben in die Führungsnuten 5. Der zwischen den Schäften 8 der Schneidmesser 7 und Führungsnuten 5 dadurch entstehende Reibungsschluss verhindert eine Überbeanspruchung der Spannschrauben in der Klemmplatte 6.
Die Befestigungsvorrichtung der Klemmplatte 6 ist in der Zeichnung durch eine Ausnehmung 12 ausgebildet, deren Grundfläche eine bündige Fläche mit den benachbarten Führungsnuten 5 bildet.
Sofern die Schäfte 8 der Schneidmesser 7 in ausreichender Höhe die Führungsnuten 5 überragen, könnte auf die Ausnehmung 12 zwischen zwei Führungsnuten 5 verzichtet werden.
Die Ausnehmungen 12, die die Führungsnuten 5 jeweils einseitig unterbrechen, begünstigen jedoch eine vorteilhafte schmale Querschnittsform im Umfangsbereich des Messerträgers 2.

## Patentansprüche

1. Rotierend antreibbares Schneidwerkzeug (1) für das Beschneiden von Druckprodukten oder Bahnen aus flexiblen Stoffen wie Papier, Kunststoff, Gewebe, Leder oder Metall, bestehend aus einem kreisförmigen Messerträger (2), der mit einer Antriebswelle lösbar verbunden ist und über den Umfang verteilt vorstehende, in Führungsnuten (5) nachstellbare Schneidmesser (7) aufweist, welche an einer von der Nabe (3) an den Umfang des Messerträgers (2) kegelig verlaufenden Aufspannanordnung befestigt sind, wobei die am Umfang des Messerträgers vorstehenden Schneidmesserenden (9) eine zur Rotationsachse (10) des Schneidwerkzeuges (1) senkrechte Schneidebene bilden, dadurch gekennzeichnet, dass die Schneidmesser (7) einen in schwalbenschwanzförmig ausgebildeten Führungsnuten (5) verschiebbaren Einspannquerschnitt aufweisen und jeweils paarweise von einer zwischen ihnen angeordneten, gegen den Messerträger (2) festspannbaren Klemmplatte (6) arretierbar sind.

2. Schneidwerkzeug nach Anspruch 1, dadurch gekennzeichnet, dass zwischen den Führungsnuten (5) eine der Klemmplatte (6) zugeordnete Befestigungsvorrichtung vorgesehen ist.

3. Schneidwerkzeug nach Anspruch 2, dadurch gekennzeichnet, dass die Befestigungsvorrichtung eine gegenüber der festgespannten Klemmplatte (6) tiefere Ausnehmung (12) aufweist.

4. Schneidwerkzeug nach Anspruch 3, dadurch gekennzeichnet, dass die Ausnehmung (12) und die benachbarten Grundflächen der Führungsnuten (5) eine wenigstens annähernd ebene Fläche bilden.

5. Schneidwerkzeug nach einem der Ansprüche 1 bis 4, dadurch gekennzeichnet, dass die Führungsnuten (5) radial zur Rotationsachse (10) der Schneidmesser (7) angeordnet sind.

6. Schneidwerkzeug nach einem der Ansprüche 1 bis 5, dadurch gekennzeichnet, dass die Schneidmesser (7) in der Gebrauchslage jeweils in dem von der Klemmplatte (6) abgewendeten Führungsteil zweier benachbarter Führungsnuten (5) eingespannt sind.

7. Schneidwerkzeug nach einem der Ansprüche 1 bis 6, dadurch gekennzeichnet, dass die sich zur Rotationsachse (10) querschnittlich verjüngende Klemmplatte (6) mit den Führungsnuten (5) resp. Schneidmessern (7) korrespondierende Seitenkanten aufweisen.

## Claims

1. Rotary cutting tool (1) for cutting printed products or webs of flexible materials, such as paper, plastic, woven fabric, leather or metal, consisting of a circular blade holder (2) releasably connected to a drive shaft and provided with projecting cutting blades (7) distributed over the circumference, adjustable in guide grooves (5) and secured to a clamping arrangement extending conically from the hub (3) to the circumference of the blade holder (2), the cutting blade ends (9) projecting from the circumference of the blade holder forming a cutting plane perpendicular to the axis of rotation (10) of the cutting tool (1), characterised in that the cutting blades (7) have a clamping cross section displaceable in dovetailed guide grooves (5) and can be locked in pairs by a clamping plate (6) arranged between them which can be fixed in position relative to the blade holder (2).

2. Cutting tool according to claim 1, characterised in that a fixing device associated with the clamping plate (6) is provided between the guide grooves (5)

3. Cutting tool according to claim 2, characterised in that the fixing device has a recess (12) which is deeper than the fixed clamping plate (6).

4. Cutting tool according to claim 3, characterised in that the recess (12) and the adjacent base surfaces of the guide grooves (5) form an at least approximately flat surface.

5. Cutting tool according to one of claims 1 to 4, characterised in that the guide grooves (5) are arranged radially relative to the axis of rotation (10) of the cutting blades (7).

6. Cutting tool according to one of claims 1 to 5, characterised in that the cutting blades (7) are clamped in the guide parts of two adjacent guide grooves (5) remote from the clamping plate (6) in the position of use.

7. Cutting tool according to one of claims 1 to 6, characterised in that the clamping plate (6) with a cross section tapering relative to the axis of rotation (10) has side edges corresponding to the guide grooves (5) or cutting blades (7).

## Revendications

1. Outil de coupe entraîné en rotation (1) pour la découpe de produits imprimés ou de bandes en matières souples telles que papier, plastique, tissus, cuir ou métal, composé d'un porte-lames (2) circulaire raccordé de façon amovible à un arbre moteur et qui présente des lames (7) en saillie, réparties sur le pourtour, et réglables dans des rainures de guidage (5), lesquelles sont fixées sur l'un des dispositifs de serrage en forme de cône s'étendant du moyeu (3) au pourtour du porte-lames (2), les extrémités des lames (9) en saillie sur le pourtour du porte-lames formant un plan de coupe perpendiculaire à l'axe de rotation (10) de l'outil de coupe (1), **caractérisé en ce que** les lames (7) présentent une section de fixation déplaçable dans des rainures de guidage (5) formées en queue d'aronde et qu'elles peuvent être bloquées respectivement par paires par une plaque de serrage (6) placée entre elles, pouvant être serrée contre les porte-lames (2).

2. Outil de coupe selon la revendication 1, **caractérisé en ce qu**'un dispositif de fixation adjoint à la plaque de serrage (6) est prévu entre les rainures de guidage (5).

3. Outil de coupe selon la revendication 2, **caractérisé en ce que** le dispositif de fixation présente un évidement (12) plus profond par rapport à la plaque de serrage (6) serrée.

4. Outil de coupe selon la revendication 3, **caractérisé en ce que** l'évidement (12) et les surfaces de base adjacentes de la rainure de guidage (5) forment une surface au moins approximativement plane.

5. Outil de coupe selon l'une des revendications 1 à 4, **caractérisé en ce que** les rainures de guidage (5) sont placées radialement par rapport à l'axe de rotation (10) des lames (7).

6. Outil de coupe selon l'une des revendications 1 à 5, **caractérisé en ce que** les lames (7) en position d'utilisation sont fixées respectivement dans la partie de guidage détournée de la plaque de serrage (6) de deux rainures de guidage (5) adjacentes.

7. Outil de coupe selon l'une des revendications 1 à 6, **caractérisé en ce que** la plaque de serrage (6), dont la section diminue en direction de l'axe de rotation (10), présente des bords latéraux correspondants aux rainures de guidage (5) resp. aux lames (7).
